# FASCICULE DE BREVET EUROPEEN

(11) **EP 0 545 771 B1**
(45) Date de publication et mention de la délivrance du brevet: **18.09.1996**
(21) Numéro de dépôt: 92403149.5
(22) Date de dépôt: 23.11.1992
(51) Int. Cl.: B01J 8/00, C10G 11/18, B04C 3/00, B04C 7/00

(54) **Séparateur extracteur cyclonique à co-courant**
Gleichstrom-Zyklonextraktionsvorrichtung
Concurrent cyclone extractor

(30) Priorité: 05.12.1991 FR 9115063
(43) Date de publication de la demande: 09.06.1993
(73) Titulaire: INSTITUT FRANCAIS DU PETROLE, F-92502 Rueil-Malmaison (FR)
(72) Inventeur: Gauthier, Thierry, F-69230 Saint Genis Laval (FR)

(56) Documents cités:
- EP-A- 0 139 390
- EP-A- 0 169 008
- EP-A- 0 250 046
- EP-A- 0 461 003
- FR-A- 2 678 280
- US-A- 4 414 100

## Description

L'invention concerne un séparateur extracteur cyclonique à co-courant pour séparer les particules solides d'un gaz.

Dans l'industrie pétrolière, et plus précisément dans les procédés de conversion de charge hydrocarbonée sur catalyseur effectués en lit circulant, la charge est mise au contact du catalyseur dans un réacteur. Le rapport en poids du débit du catalyseur sur le débit de charge est élevé et peut varier en général de 1 : 1 à 15 : 1. A la sortie du réacteur, il faut séparer les produits de la réaction des solides catalytiques : les produits de la réaction sont entraînés vers une séparation secondaire et les solides sont recyclés avec, dans certains procédés, la régénération du catalyseur.

Avant de recycler le catalyseur, il est important de désorber les produits hydrocarbonés encore présents à la surface ou à l'intérieur du catalyseur pour récupérer les produits de la réaction qui seraient perdus sans cela.

La présente invention concerne un équipement permettant d'effectuer une séparation rapide des produits gazeux et du catalyseur, et de récupérer les produits restant sur le catalyseur à l'issue de la séparation.

Certains procédés de conversion catalytique, tels que le craquage catalytique de charges hydrocarbonées, nécessitent une séparation rapide des produits gazeux à la fin de la réaction catalytique, pour limiter leur dégradation thermique.

Il peut alors être avantageux d'utiliser des cyclones connectés directement au réacteur (par exemple au sommet d'un réacteur à lit ascendant) plutôt que de se contenter d'une séparation inertielle dans un gros volume qui est synonyme de long temps de séjour. Des exemples de procédés de conversion de coupes hydrocarbonées avec séparation rapide sont donnés par exemple dans le brevet de Rod et al. (US4946656) où la séparation est effectuée dans un cyclone dit "à rebours" ou dans le brevet de Gauthier et al. (demande de brevet FR90/06937 non publiée au jour du dépôt de la présente demande) où la séparation est effectuée dans un cyclone à co-courant.

La séparation rapide des effluents de craquage catalytique de coupes hydrocarbonées permet généralement de gagner en sélectivité, en évitant de former les produits tels que le fuel gaz ou le coke qui sont faiblement valorisés en très grandes quantités, et en privilégiant plutôt la sélectivité en essence et en coupe d'huile légère (LCO) (en anglais Light Cycle Oil) dont la valorisation est nettement supérieure. Cependant, si cette séparation rapide n'est pas accompagnée d'une extraction (stripage) efficace, et placée à proximité, dans le temps, de la phase de séparation, on perdra une partie des avantages de la séparation rapide, en gardant adsorbés sur le catalyseur des produits valorisables qui seront dégradés thermiquement. De même, les produits désorbés du catalyseur doivent être évacués rapidement de l'enceinte dans laquelle est effectuée l'extraction. Par exemple, dans le brevet US4946656, le catalyseur est évacué de la zone de séparation par une jambe de retour qui tombe dans l'extracteur. Les produits extraits du catalyseur sont envoyés vers l'étape de séparation secondaire, en commun avec les produits séparés à la séparation, dans une enceinte de grand volume où ils sont eux aussi fortement exposés à la dégradation thermique des produits.

Il est également possible comme dans le brevet français 83/20435 d'inclure une zone d'extraction dense à la base d'un cyclone à rebours, intercalée par exemple entre la zone de retournement du vortex et la sortie des solides. Cette configuration présente l'avantage de séparer les produits adsorbés sur le catalyseur grâce à un courant gazeux injecté dans la même enceinte de séparation primaire gaz-particules de catalyseur. Les produits gazeux de la réaction sont alors prélevés dans la partie supérieure de l'enceinte effectuant la séparation. L'inconvénient d'un tel appareil est qu'il faut, afin de garder des performances de séparation acceptables, placer un déflecteur entre la zone d'extraction et la zone de séparation. Ce déflecteur permet de guider le vortex gazeux lors de son retoumement dans l'enceinte de séparation. Il est nécessaire de fixer cet élément matériellement au corps de l'enceinte de séparation. Les fixations vont nuire à l'écoulement régulier des solides aux parois et, exposées à des écoulements continus de solides, elles risquent de s'éroder rapidement, ce qui pourrait entraîner un dysfonctionnement de l'appareil.

La présente invention permet d'éviter ces inconvénients grâce à une utilisation avantageuse des propriétés hydrodynamiques de l'écoulement gaz/solide dans un séparateur cyclonique (ou cyclone) à co-courant, modifié par adjonction d'une capacité, de volume important, dans l'enceinte d'évacuation de la sortie des solides.

Plus précisément, l'invention concerne un séparateur extracteur, cyclonique à co-courant, pour la séparation d'un mélange gaz/solide *M*_{A}, comprenant au moins une base dense *D*_{A} et une phase légère *L*_{A}, en au moins une phase dense et en au moins une phase légère, avec extraction des gaz sorbés par le solide, ledit séparateur extracteur comprenant:
- une enceinte (1) dite première enceinte extérieure, de forme allongée le long d'un axe (X), de section sensiblement circulaire de diamètre interne D₁, de longueur L₁, comprenant à une première extrémité, des moyens pour l'introduction du mélange *M*_{A} par une entrée (4) dite externe, lesdits moyens permettant de conférer, au moins à la phase légère *L*_{A}, un mouvement hélicoïdal dans la direction de l'écoulement du mélange *M*_{A} dans ladite enceinte,
- une enceinte (2) dite intérieure, de forme allongée le long de l'axe (X), de section sensiblement circulaire de diamètre D₂ inférieur à D₁, de longueur L₂ inférieure à L₁, dont l'extrémité proche de l'entrée (4) externe située à une distance Ls inférieure à L₁ du niveau extrême de l'entrée (4) externe constitue l'entrée (5) dite interne par laquelle pénètre au moins une partie de la phase légère *L*_{A}, ladite enceinte étant prolongée par au moins un conduit (6) permettant l'évacuation de la phase légère *L*_{A} séparée à l'extérieur de la première enceinte extérieure,
- une enceinte (3) dite seconde enceinte extérieure, présentant un axe de symétrie sensiblement vertical, raccordée à ladite première enceinte par une ouverture de diamètre D1, ladite seconde enceinte recueillant la phase dense *D*_{A} séparée comporte des moyens (10) pour l'injection d'une phase légère d'extraction *L*_{B}, l'injection ayant lieu à contre-courant de l'écoulement de la phase dense séparée et au moins en partie dans ladite phase dense qui est fluidisée au moins en partie, et comporte au moins une sortie (12) pour la récupération de la phase dense *D*_{A} désorbée au moins en partie. Cette phase légère dite *L*_{B} est évacuée du séparateur extracteur en mélange avec la phase *L*_{A} par l'enceinte (2) et le conduit (6).

Pour faciliter la compréhension, l'invention sera décrite à partir des figures, sans pour autant limiter sa portée auxdites figures.

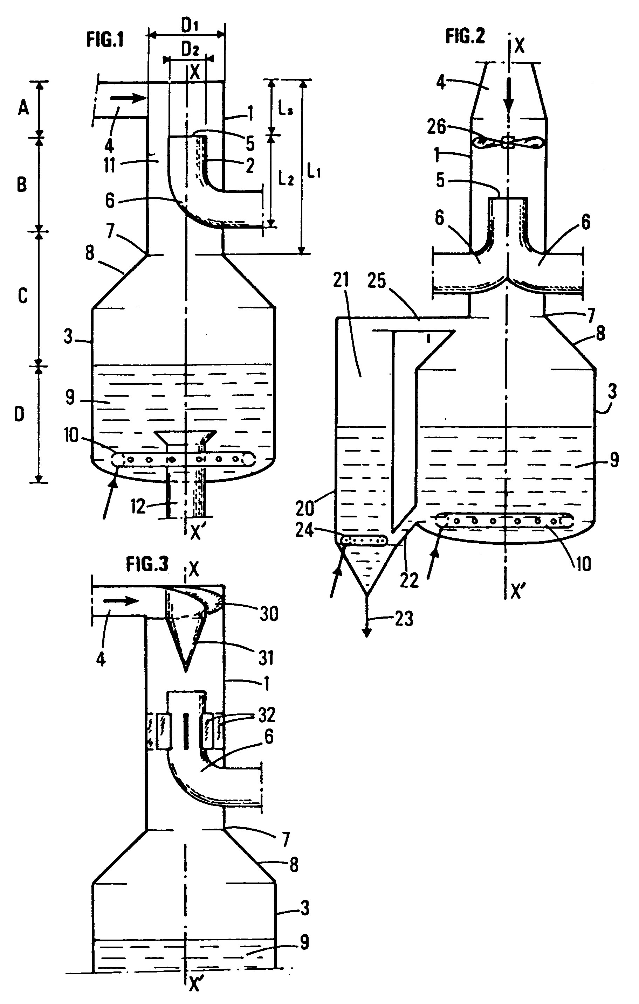

Chacune des figures 1 à 5 représente un mode de réalisation de l'invention.

Sur la figure 1 est représenté un séparateur extracteur cyclonique selon l'invention.

Il comporte une première enceinte extérieure (1), de forme allongée sensiblement régulière, ayant un axe (X) qui est un axe de symétrie, ayant une section sensiblement circulaire de diamètre interne D₁ et une longueur L₁.

L'axe (X) est en général sensiblement vertical (figures 1 à 4) mais il peut être sensiblement horizontal (figure 5).

A l'une de ses extrémités, l'enceinte (1) comporte une entrée (4) dite externe par laquelle le mélange *M*_{A} à traiter arrive. De préférence, le mélange *M*_{A} est introduit par une entrée (4) tangentielle suivant une direction sensiblement perpendiculaire à l'axe de l'enceinte extérieure. Cette entrée tangentielle a de préférence une section rectangulaire ou carrée dont le côté parallèle à l'axe de l'enceinte extérieure a une dimension (Lk) habituellement d'environ 0,25 à environ 1 fois le diamètre D₁, et le côté perpendiculaire à l'axe de l'enceinte extérieure a une dimension (hk) habituellement d'environ 0,05 à environ 0,5 fois le diamètre D₁.

Des moyens peuvent également être placés à l'intérieur de l'entrée (4) pour conférer en aval, dans le sens de circulation du mélange *M*_{A}, un mouvement hélicoïdal ou tourbillonnant, au moins à la phase légère *L*_{A} du mélange *M*_{A} (figure 2). Ces moyens sont habituellement des pales inclinées (voir figure 2). L'entrée tangentielle, les pales ou autres moyens équivalents constituent les moyens d'introduction du mélange *M*_{A}.

Les séparateurs extracteurs selon l'invention comportent également une enceinte intérieure (2) de forme allongée le long d'un axe (X), de section sensiblement circulaire, disposée coaxialement par rapport à l'enceinte (1), comprenant à une distance (Ls), inférieure à (L₁), du niveau extrême de l'entrée externe (4), une entrée (5) dite entrée interne, de diamètre externe D₂ inférieur à D₁. Le diamètre de cette entrée interne (5) est habituellement d'environ 0,2 à environ 0,9 fois le diamètre (D₁), le plus souvent d'environ 0,4 à environ 0,8 fois le diamètre (D₁) et de préférence d'environ 0,4 à 0,6 fois le diamètre (D₁). Cette distance (Ls) est habituellement d'environ 0,2 à environ 9,5 fois le diamètre (D₁) et le plus souvent d'environ 0,5 à environ 2 fois le diamètre (D₁). Une distance relativement courte comprise entre 0,5 et 2 fois le diamètre (D₁) permet habituellement une séparation très rapide et une bonne efficacité de séparation.

Sous l'effet du vortex créé, le mélange se sépare au moins en partie en une phase dense *D*_{A} et une phase légère *L*_{A}. La phase légère *L*_{A} pénètre, au moins en partie, dans l'entrée (5) et est évacuée vers l'extérieur de l'enceinte (1) par au moins un conduit (6) qui prolonge l'enceinte (2).

Une zone (A) de séparation est ainsi définie entre le niveau extrême de l'entrée (4) et approximativement le niveau de l'entrée (5).

Les séparateurs extracteurs selon l'invention comportent également une enceinte (3) dite seconde enceinte extérieure, de section inférieure, égale ou supérieure à celle de l'enceinte (1). De préférence la section de l'enceinte (3) est au moins égale à celle de l'enceinte (1) et le plus souvent elle est supérieure à celle de l'enceinte (1). En général la section de l'enceinte (3) est supérieure d'au moins 0,5 % et le plus souvent d'au moins 25 % à celle de l'enceinte (1). L'enceinte (3) est raccordée à l'enceinte (1) par une ouverture (7) de même diamètre D₁ que celui de l'enceinte (1).

De préférence, l'enceinte (3) a une forme allongée le long d'un axe et une section sensiblement circulaire de diamètre D de préférence supérieur à D1.

Avantageusement, l'enceinte (3) est dans le prolongement de l'axe (X) de l'enceinte (1). La figure 1 le montre, avec une surface (8) conique de raccordement.

La phase dense *D*_{A} séparée au moins en partie dans la zone A s'écoule vers l'enceinte (3), dans le fond de laquelle elle est recueillie, elle forme alors un lit (9) dit fluidisé.

L'enceinte (3) comporte des moyens (10) pour l'injection dans la phase *D*_{A} d'une phase légère *L*_{B} d'extraction, à contre-courant de l'écoulement de la phase dense *D*_{A} séparée.

En effet, naturellement dans un cyclone à co-courant, la phase légère a tendance à circuler en partie dans l'espace périphérique (11) situé entre l'enceinte extérieure (1) et l'enceinte intérieure (2) avant de sortir du séparateur extracteur grâce à cette enceinte (2).

La conséquence est que dans ledit espace périphérique, les solides restent maintenus à la paroi sous l'effet de la force centrifuge bien au-delà du niveau où est prélevée la phase légère. En contrepartie, un rétromélange qui peut être important dans certains cas peut apparaître dans ledit espace périphérique.

Un moyen simple visant à réduire la circulation de la phase légère *L*_{A} dans cet espace est d'injecter en petites quantités une phase légère *L*_{B} à contre-courant de la phase légère *L*_{A}. L'injection de la phase légère *L*_{B} peut s'effectuer en divers endroits simultanément. Par ailleurs, il est également possible d'injecter dans ce dernier cas des phases légères de compositions différentes. Si l'injection de la phase légère *L*_{B} est convenablement dosée, les solides restent en majorité maintenus en périphérie au niveau de l'entrée (5) de l'enceinte (2) de prélèvement des phases légères, ce qui permet d'éviter que les solides soient entraînés vers l'enceinte d'évacuation des phases légères en quantités trop importantes. Simultanément, la phase légère *L*_{A} est repoussée par la phase légère *L*_{B} injectée à contre-courant ce qui limite le rétromélange.

Il y a avantage à utiliser ces propriétés hydrodynamiques pour limiter le rétromélange de la phase légère gazeuse *L*_{A} séparée comme il vient d'être mentionné, mais également pour favoriser la bonne extraction des produits. En effet, les vapeurs de la phase légère *L*_{B} injectées à contre-courant qui circulent dans l'espace périphérique (11) permettent d'effectuer une extraction très rapide des produits de réaction encore présents sur le catalyseur.

Par ailleurs, ladite injection confère dans l'enceinte (3) à la phase dense *D*_{A} les propriétés d'un milieu dit fluidisé. Le taux de vide du lit est compris entre 35 et 75 % de préférence.

La phase légère L_{B} est injectée sous forme gazeuse. Elle comprend par exemple de la vapeur d'eau, de l'azote, une charge hydrocarbonée vaporisée à bas point d'ébullition.

Les moyens d'injection (10) sont situés dans le fond de l'enceinte (3) pour l'injection dans la phase dense *D*_{A}. Ce sont par exemple des orifices agencés régulièrement dans une couronne centrée sur l'axe de l'enceinte (3). On définit ainsi, à partir de la zone A de séparation, une zone B dans laquelle la phase dense *D*_{A} subit un écoulement descendant et où, au moins une partie de la phase *L*_{A} s'écoule en maintenant la phase dense *D*_{A} à la paroi, la phase légère *L*_{A} est évacuée, une zone C dans laquelle la phase dense *D*_{A} continue son écoulement descendant et subit une désorption partielle et enfin une zone D dans laquelle la phase dense maintenue en lit fluidisé, est partiellement désorbée et est partiellement évacuée.

Les moyens (12) pour l'évacuation d'une partie au moins de la phase dense *D*_{A} sont disposés dans la partie inférieure de l'enceinte (3), latéralement (puits de désengagement par exemple sur la figure 2) ou axialement (puits cylindrique vertical par exemple sur la figure 1).

La figure 2 représente un autre mode de réalisation du séparateur extracteur selon l'invention, qui diffère de celui représenté sur la figure 1, par les moyens mis en oeuvre pour conférer à la phase dense *D*_{A} et la phase légère *L*_{A} la vorticité nécessaire à la séparation des phases. Sur la figure 1, les moyens représentés sont une entrée dite tangentielle constituée par un conduit sensiblement horizontal, arrivant tangentiellement à l'enceinte (1). Sur la figure 2, les moyens d'introduction mis en oeuvre pour conférer à la phase dense *D*_{A} et à la phase légère *L*_{A} la vorticité nécessaire, à la séparation des phases dans la zone A, sont constitués de pales ou hélices (26) placées axialement dans l'entrée (4), également coaxiale à l'enceinte (1). L'appareil décrit sur la figure 2 se différencie de celui décrit sur la figure (1) également par le nombre de conduits (6) prolongeant l'enceinte (2) pour évacuer la phase légère *L*_{A}. En effet, afin de diminuer la taille des appareils supplémentaires aptes à récupérer les particules qui n'auraient pas été séparées dans l'appareil de l'invention, il peut être avantageux de diviser le flux de phase légère *L*_{A} en plusieurs flux, par exemple au moyen de plusieurs conduits (6) comme montré sur la figure 2. Ce(s) conduit(s) est soit disposé de manière à ce que la phase légère soit évacuée dans une direction sensiblement axiale par rapport à l'enceinte (1) (voir par exemple figure 5), soit dans une direction sensiblement perpendiculaire à l'axe de l'enceinte (1) (voir par exemple les figures 1 à 4).

La figure 2 présente également des moyens (20) destinés à évacuer la phase dense *D*_{A} au moins en partie désorbée (c'est-à-dire que les produits de réaction retenus par le solide ont été au moins en partie extraits) constitués par une enceinte (21) indépendante des enceintes (1), (2) et (3) formant un puits de désengagement. Cette enceinte possède une entrée (22) dans laquelle la phase dense *D*_{A}, recueillie dans l'enceinte (3), s'écoule par gravité, et une sortie (23). La concentration en phase dense dans la sortie (23) est maintenue à la valeur désirée grâce à la fluidisation imposée dans l'enceinte (21) résultant d'une injection de phase légère *L*_{C} par les moyens (24) et grâce à une ligne d'équilibrage (25) permettant d'évacuer l'excès de gaz *L*_{C} non entraîné à la sortie (23) qui se mélangera avec la phase *L*_{B}. Avantageusement *L*_{C} sera choisi pour ses propriétés désorbantes. *L*_{C} peut être identique ou différent de *L*_{B}. La phase légère *L*_{C} sert au moins en partie à la fluidisation de la phase dense *D*_{A} dans le puits de désengagement.

La figure 3 est une vue de côté d'un appareil selon l'invention, comportant en outre des moyens pour contrôler l'écoulement du mélange *M*_{A} dans l'entrée tangentielle (4). En effet, il est habituellement souhaitable dans le cas de débits importants des diverses phases en présence d'utiliser des moyens permettant de favoriser la formation du vortex, comme par exemple un toit hélicoïdal descendant (30) à partir du niveau extrême de l'entrée tangentielle ou une volute par exemple interne (à enroulement plan) et permettant en plus de limiter la turbulence au niveau de l'entrée tangentielle. Habituellement, dans le cas d'un toit hélicoïdal descendant, le pas de l'hélice est d'environ 0,01 à 3 fois la valeur de Lₖ et le plus souvent d'environ 0,5 à environ 1,5 fois cette valeur. Pour stabiliser le vortex dans sa progression, on peut également prévoir un cône de stabilisation (31) fixé au niveau de l'entrée (4) selon l'axe en vis-à-vis de l'entrée (5) d'évacuation de la phase légère *L*_{A}. Sur la figure (3) sont également représentés des moyens (32) pour briser l'écoulement à la paroi des solides. Ces moyens (32) sont généralement des pales sensiblement planes dont le plan comporte l'axe (X) de l'enceinte (1). Ces moyens sont de préférence fixés sur au moins une paroi de l'une des enceintes (1) ou (2). Ils sont de préférence fixés à la paroi extérieure de l'enceinte intérieure (2), de préférence de sorte que la distance L_{P} entre l'entrée interne et le point desdites pales le plus proche de cette entrée interne soit d'environ 0 à environ 5 fois le diamètre D₁ et de préférence d'environ 0,1 à environ 1 fois ce diamètre D₁. Le nombre de pales est habituellement d'au moins 2 et par exemple de 2 à 50 et le plus souvent de 3 à 50. Ces pales ont habituellement les caractéristiques de celles décrites dans la demande de brevet FR90/06937 au nom de la demanderesse.

L'avantage d'utiliser de tels moyens est de briser l'écoulement à la paroi des solides. Ils permettent également d'uniformiser la répartition de la phase dense *D*_{A} arrivant dans l'enceinte (3), ce qui est très favorable à l'extraction des produits sorbés. Enfin, ils permettent de répartir de façon homogène les solides coulant à la paroi sur toute la section périphérique de l'enceinte (1) entourant l'enceinte (2) ou le(s) conduit(s) (6). Il faut noter que, contrairement à l'application en séparation rapide (demande de brevet FR90/06937 non encore publiée), le rôle des moyens (32) n'est pas seulement de limiter la progression du vortex et de diminuer le rétromélange, car ici l'injection de la phase légère dextraction *L*_{B} assure en partie cette fonction. Ces moyens (32) pourraient également être des déflecteurs visant à améliorer le contact entre la phase descendante *D*_{A} et la phase légère d'extraction *L*_{B}.

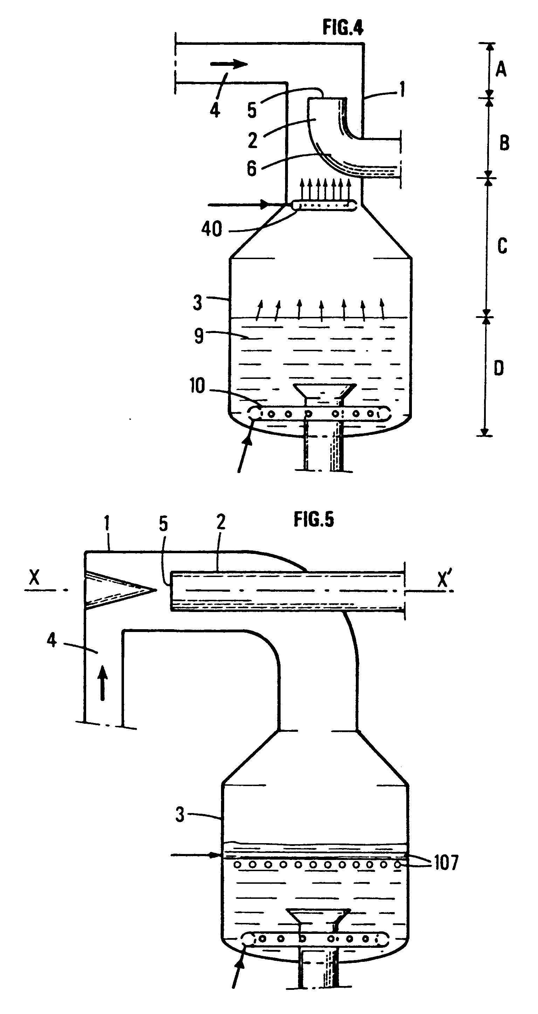

Sur la figure 4, des moyens (40) ont été rajoutés, permettant l'introduction de phase légère d'extraction L_{B} au-dessus du lit de la phase dense *D*_{A}, la phase légère *L*_{B} étant injectée à contre-courant de la phase dense *D*_{A} qui s'écoule de la zone de séparation A vers l'enceinte (3). Cette injection permet de diminuer dans la phase diluée de solides (circulant de la zone A vers l'enceinte (3)) la pression partielle de gaz désorbés (hydrocarbures par exemple) remontant de la zone d'extraction D vers l'enceinte (2) d'évacuation, et donc de favoriser la désorption.
Les moyens (40) sont des moyens classiques d'introduction de gaz (tels qu'une tuyauterie droite ou circulaire munie d'orifices) devant respecter une distribution de fluide aussi homogène que possible. Ces moyens (40) sont donc disposés au niveau de la zone C, c'est-à-dire en-dessous de l'enceinte (2) avec son conduit (6) d'évacuation, et au-dessus du lit solide de la zone D.

Sur la figure (5), on a schématisé un appareil selon la présente invention, et qui ne diffère de l'appareil décrit précédemment que par le fait que l'axe (X) du séparateur extracteur est positionné horizontalement, ce qui permet de diminuer la hauteur de l'équipement, et peut donc être avantageux dans certains cas. Il faut cependant maintenir l'axe de l'enceinte (3) vertical de façon à fluidiser correctement en phase dense.

Afin d'améliorer le stripage dans l'enceinte (3) dans le lit fluidisé (9), des moyens visant à améliorer le contactage entre la phase légère *L*_{B} et la phase dense *D*_{A} peuvent être insérés dans le lit fluidisé (9). Ces moyens sont par exemple des tubes (107) disposés en rangées régulières sur la section de l'enceinte (3), et représentés sur la figure (5). On choisira par exemple de disposer des tubes de diamètre variant entre 0.02 et 0.08 m disposés à intervalle d'au moins une fois le diamètre des tubes. Ces tubes pourraient avantageusement être utilisés pour réchauffer le lit fluidisé et favoriser la désorption des produits de la réaction.

Dans les séparateurs extracteurs selon l'invention le temps de séjour des solides constituants la phase dense *D*_{A} dans le lit fluidisé (9) est habituellement d'environ 10 (s) secondes à environ 15 (min) minutes. Le plus souvent ce temps de séjour est d'environ 30 s à environ 10 min.

Le plus souvent le rapport de la vitesse superficielle de la phase *L*_{B} à la vitesse minimale de fluidisation (reliée aux propriétés de la phase dense *D*_{A} et de la phase légère *L*_{B}) est d'environ 1 : 1 à 500 : 1 et de préférence 10 : 1 à 100 : 1.

Le temps de séjour des particules solides de la phase *D*_{A} dans l'espace périphérique (11) (zones B et C) varie habituellement de 10⁻¹ s à 100 s et préférentiellement par exemple dans un séparateur extracteur de diamètre D₁ égal à 50 cm de 3 à 15 s.

Les séparateurs extracteurs selon l'invention peuvent être utilisés pour la séparation rapide, à partir d'un mélange *M*_{A}, comprenant une phase dense *D*_{A} et une phase légère *L*_{A}, de ladite phase dense et de ladite phase légère et à l'extraction des produits adsorbés par ladite phase dense *D*_{A}. Le mélange à séparer peut être un mélange obtenu à l'issue d'une réaction chimique et comprenant au moins une phase qui contribue à cette réaction.

### Exemple

Des essais ont été conduits sur un séparateur extracteur tel que celui représenté par la figure 3 ayant la géométrie suivante :
enceinte (1) : cylindrique, de diamètre 5 cm, de longueur 75 cm munie d'une entrée tangentielle à section rectangulaire (2,5 cm x 1,3 cm, le plus grand côté étant parallèle à l'axe (X)) avec un toit hélicoïdal et un cône de stabilisation de 6 cm de hauteur.
enceinte (2) : Ls = 12,5 cm, la sortie du conduit d'évacuation est située à 55 cm du niveau extrême de l'entrée tangentielle (la cote L₂ est égale à 42,5 cm). Le diamètre externe de l'enceinte (2) est de 2,5 cm et son diamètre interne de 2,3 cm.
enceinte (3) : cylindrique, de diamètre 30 cm, haute de 1,2 m.

Le débit volumique Q₂ de mélange M_{A} gaz/catalyseur entrant est de 8,3 X 10⁻³ m³/s ce qui correspond à une vitesse superficielle de 25 m/s pour la phase légère présente dans le mélange M_{A} à l'entrée du séparateur extracteur. Diverses expériences ont été conduites, le débit de la phase légère *L*_{B} d'extradion (en volume Q₁) ayant varié de 0 à 15 % du débit Q₂. Dans ces conditions, la vitesse de passage dans l'espace périphérique (11) est inférieure à 20 cm/s.

Les résultats suivants ont été obtenus avec du catalyseur de FCC de diamètre moyen 65 micromètres dans les conditions ambiantes de température et pression. Les phases légères *L*_{A} et *L*_{B} étant de l'air.

Ils montrent qu'un tel séparateur extracteur est tout-à-fait opérationnel puisque dans le domaine de débit de phase *L*_{B}, injecté à contre-courant (voir ratio Q1/Q2 correspondant à nos expériences) l'efficacité de séparation baisse relativement peu.

| **Débit de solide entrant dans le mélange** ***M***_{**A**} | **Q1/Q2 %** | **Efficacité de séparation %** | **Lo** | **Pa - Pd Pascal** |
|---|---|---|---|---|
| 22 g/s | 0 | 99,98 | 2,0 | 2 800 |
| 22 g/s | 1,67 | 99,97 | 2,0 | 2 800 |
| 22 g/s | 2,69 | 99,96 | 2,0 | 2 700 |
| 22 g/s | 5,28 | 99,95 | 2,0 | 2 700 |
| 69 g/s | 0 | 99,99 | 6,4 | 3 000 |
| 68 g/s | 2,7 | 99,97 | 6,3 | 2 700 |
| 71 g/s | 5,3 | 99,88 | 6,6 | 3 000 |
| Lo = rapport massique solide sur gaz dans le mélange *M*_{A}. Pa = pression en amont de (4). Pd = pression à la sortie du conduit (6) d'évacuation de la phase légère. | | | | |

On voit donc que l'appareil qui fait l'objet de la présente invention présente des avantages majeurs sur les différents appareils qui sont proposés dans la littérature. Il permet d'effectuer une séparation rapide, une extraction en phase diluée et une extraction profonde en phase dense.

## Revendications

1. Séparateur extracteur cyclonique à co-courant, pour la séparation d'un mélange gaz/solide *M*_{A}, comprenant au moins une phase dense *D*_{A} et une phase légère *L*_{A}, en au moins une phase dense et en au moins une phase légère, avec extraction des gaz sorbés par le solide, ledit séparateur extracteur comprenant:
- une enceinte (1) dite première enceinte extérieure, de forme allongée le long d'un axe (X), de section sensiblement circulaire de diamètre interne D₁, de longueur L₁, comprenant à une première extrémité, des moyens pour l'introduction du mélange *M*_{A} par une entrée (4) dite externe, lesdits moyens permettant de conférer, au moins à la phase légère *L*_{A}, un mouvement hélicoïdal dans la direction de l'écoulement du mélange *M*_{A} dans ladite enceinte.
- une enceinte (2) dite intérieure, de forme allongée le long de l'axe (X), de section sensiblement circulaire de diamètre D₂ inférieur à D₁, de longueur L₂ inférieure à L₁, dont l'extrémité proche de l'entrée (4) externe située à une distance Ls inférieure à L₁ du niveau extrême de l'entrée (4) externe constitue l'entrée (5) dite interne par laquelle pénètre au moins une partie de la phase légère *L*_{A}, ladite enceinte étant prolongée par au moins un conduit (6) permettant l'évacuation de la phase légère *L*_{A} séparée à l'extérieur de la première enceinte extérieure,
- une enceinte (3) dite seconde enceinte extérieure, présentant un axe de symétrie sensiblement vertical, raccordée à ladite première enceinte par une ouverture de diamètre D₁, ladite seconde enceinte recueillant la phase dense *D*_{A} séparée comporte des moyens (10) pour l'injection d'une phase légère d'extraction *L*_{B}, l'injection ayant lieu à contre-courant de l'écoulement de la phase dense séparée et au moins en partie dans ladite phase dense qui est fluidisée au moins en partie, et comporte au moins une sortie (12) pour la récupération de la phase dense *D*_{A} désorbée au moins en partie.

2. Séparateur extracteur selon la revendication 1, dans lequel l'enceinte extérieure (3) est située dans le prolongement de la première enceinte extérieure selon l'axe (X).

3. Séparateur extracteur selon l'une des revendications précédentes, dans lequel la seconde enceinte extérieure (3) a une forme allongée le long d'un axe, et est de section sensiblement circulaire de diamètre D supérieur à D₁.

4. Séparateur extracteur selon l'une des revendications précédentes, dans lequel un puits cylindrique vertical disposé sur l'axe de la seconde enceinte extérieure (3) constitue la sortie (12) de la phase dense.

5. Séparateur extracteur selon l'une des revendications précédentes, dans lequel la phase dense sort par un puits de désengagement.

6. Séparateur extracteur selon la revendication 5, dans lequel des moyens pour l'injection de phase légère de fluidisation sont prévus dans le puits de désengagement.

7. Séparateur extracteur selon l'une des revendications précédentes, dans lequel les moyens (10) pour l'injection de la phase légère d'extraction sont constitués par une couronne centrée sur l'axe de la seconde enceinte (3), et munie d'orifices dirigés vers l'ouverture (7).

8. Séparateur extracteur selon l'une des revendications précédentes, comportant en outre des moyens (40) pour l'injection de phase légère d'extraction au-dessus du lit de phase dense et à contre-courant de l'écoulement de la phase dense séparée.

9. Séparateur extracteur selon l'une des revendications précédentes, comportant des moyens (32) pour uniformiser la répartition de la phase dense séparée arrivant dans la seconde enceinte extérieure (3) et briser l'écoulement en paroi des solides.

10. Séparateur extracteur selon revendication 9, dans lequel les moyens (32) sont constitués par des pales.

11. Séparateur extracteur selon la revendication 10, dans lequel les pales sont fixées à la paroi extérieure de l'enceinte intérieure (2).

12. Séparateur extracteur selon l'une des revendications précédentes, dans lequel le(s) conduite(s) (6) sont disposées de façon à ce que la phase légère soit évacuée dans une direction sensiblement axiale par rapport à la première enceinte extérieure (1).

13. Séparateur extracteur selon l'une des revendications 1 à 11, dans lequel le(s) conduite(s) (6) sont disposées de façon à ce que la phase légère soit évacuée dans une direction sensiblement perpendiculaire à l'axe de la première enceinte extérieure (1).

14. Séparateur extracteur selon l'une des revendications précédentes, dans lequel les moyens d'introduction du mélange *M*_{A} sont constitués par une entrée (4) tangentielle à l'enceinte (1).

15. Séparateur extracteur selon l'une des revendications précédentes, dans lequel les moyens d'introduction du mélange M_{A} comportent des pales (26) placées dans l'entrée (4).

16. Séparateur extracteur selon l'une des revendications précédentes, dans lequel les moyens d'introduction du mélange *M*_{A} comportent un toit hélicoïdal.

17. Séparateur extracteur selon l'une des revendications précédentes. comportant un cône de stabilisation de vortex (31) situé au niveau de l'entrée (4) selon l'axe en vis-à-vis de l'entrée (5).

18. Séparateur extracteur selon l'une des revendications précédentes, dans lequel l'enceinte (3) comporte des moyens visant à améliorer le contactage entre la phase légère *L*_{B} et ta phase dense *D*_{A}.

19. Utilisation d'un séparateur extracteur selon l'une des revendications précédentes à la séparation rapide à partir d'un mélange *M*_{A}, comprenant une phase dense *D*_{A} et une phase légère *L*_{A}, de ladite phase dense et de ladite phase légère et à l'extraction des produits adsorbés par ladite phase dense *D*_{A}.

20. Utilisation selon la revendication 19 dans laquelle le mélange à séparer est un mélange obtenu à l'issue d'une réaction chimique et comprenant au moins une phase qui contribue à cette réaction.

## Claims

1. Cocurrent cyclone separator extractor for the separation of a gas/solid mixture MA, having at least one dense phase DA and a light phase LA, into at least one dense phase and into at least one light phase, with the extraction of the gases sorbed by the solid, said separator extractor comprising:
an enclosure (1), called the first external enclosure, which is elongated along an axis (X), which has a substantially circular cross-section, of internal diameter D₁ and length L₁, having at a first end, means for the introduction of the mixture MA by a so-called external inlet (4), said means making it possible to give at least to the light phase LA a helical movement in the flow direction of the mixture MA in said enclosure,
a so-called internal enclosure (2), which is elongated along the axis (X), has a substantially circular cross-section of diameter D₂, which is less than D₁ and of length L₂, which is less than L₁, whose end close to the outer end (4) located at a distance LS less than L₁ from the extreme level of the external inlet (4) constitutes the so-called internal inlet (5) by which penetrates at least part of the light phase LA, said enclosure being extended by at least one pipe (6) permitting the discharge of the light phase LA separated outside the first external enclosure,
an enclosure (3), called the second external enclosure, having a substantially vertical axis of symmetry, connected to said first enclosure by an opening of diameter D₁, said second enclosure collecting the separated dense phase DA having means (10) for the injection of a light extraction phase LB, injection taking place in countercurrent with respect to the flow of the separated dense phase and at least in part in said dense phase which is at least partly fluidized, and has at least one outlet (12) for the recovery of the at least partly desorbed dense phase DA.

2. Separator extractor according to claim 1, wherein the external enclosure (3) is located in the extension of the first external enclosure along the axis (X).

3. Separator extractor according to either of the preceding claims, wherein the second external enclosure (3) is elongated along an axis and has a substantially circular cross-section of diameter D greater than D₁.

4. Separator extractor according to any one of the preceding claims, wherein a vertical cylindrical well located on the axis of the second external enclosure (3) constitutes the dense phase outlet (12).

5. Separator extractor according to any one of the preceding claims, wherein the dense phase passes out through a disengagement well.

6. Separator extractor according to claim 5, wherein means for injecting the light fluidization phase are provided in the disengagement well.

7. Separator extractor according to any one of the preceding claims, wherein the means (10) for the injection of the light extraction phase are constituted by a ring centered on the axis of the second enclosure (3) and provided with orifices directed towards the opening (7).

8. Separator extractor according to any one of the preceding claims also having means (40) for light extraction phase injection above the dense phase bed and in countercurrent with respect to the separated dense phase flow.

9. Separator extractor according to any one of the preceding claims comprising means (32) for rendering uniform the distribution of the separated dense phase arriving in the second external enclosure (3) and for breaking the flow on the wall of the solids.

10. Separator extractor according to claim 9, wherein the means (32) are constituted by blades.

11. Separator extractor according to claim 10, wherein the blades are fixed to the outer wall of the internal enclosure (2).

12. Separator extractor according to any one of the preceding claims, wherein the pipe or pipes (6) are arranged in such a way that the light phase is discharged in a substantially axial direction with respect to the first external enclosure (1).

13. Separator extractor according to any one of the claims 1 to 11, wherein the pipe or pipes (6) are arranged in such a way that the light phase is discharged in a direction substantially perpendicular to the axis of the first external enclosure (1).

14. Separator extractor according to any one of the preceding claims, wherein the means for introducing the mixture MA are constituted by an inlet (4) tangential to the enclosure (1).

15. Separator extractor according to any one of the preceding claims, wherein the means for introducing the mixture MA comprise blades (26) placed in the inlet (4).

16. Separator extractor according to any one of the preceding claims, wherein the means for introducing the mixture MA comprise a helical roof.

17. Separator extractor according to any one of the preceding claims, comprising a vortex stabilization cone (31) located at the inlet (4) along the axis facing the inlet (5).

18. Separator extractor according to any one of the preceding claims, wherein the enclosure (3) has means for improving contacting between the light phase LB and the dense phase DA.

19. Use of a separator extractor according to any one of the preceding claims for the rapid separation, from a mixture MA comprising the dense phase DA and a light phase LA, of said dense phase and said light phase and the extraction of the products adsorbed by said dense phase DA.

20. Use according to claim 19, wherein the mixture to be separated is a mixture obtained at the end of a chemical reaction and having at least one phase contributing to said reaction.

## Patentansprüche

1. Im Gleichstrom betreibbare Zyklonseparator-Extraktionsvorrichtung zur Trennung eines Gas-/Feststoffgemisches M_{A}, das wenigstens eine dichte Phase D_{A} und eine leichte Phase L_{A} umfaßt, in wenigstens eine dichte Phase und wenigstens eine leichte Phase, unter Extraktion der durch den Feststoff sorbierten Gase, wobei die Separator-Extraktionsvorrichtung umfaßt:
- eine Kammer (1), die sogenannte erste äußere Kammer von einer Gestalt, die länglich längs einer Achse (X) ist, von einem im wesentlichen kreisförmigen Querschnitt vom Innendurchmesser D₁ und von der Länge L₁, die an einem ersten Ende Mittel zum Einführen des Gemisches M_{A} über einen sogenannten äußeren Eintritt (4) aufweist, wobei diese Mittel es ermöglichen, wenigstens der leichten Phase L_{A} eine Spiralbewegung in der Strömungsrichtung des Gemisches M_{A} in dieser Kammer zu erteilen,
- eine sogenannte innere Kammer (2) von längs der Achse (X) länglicher Gestalt mit einem im wesentlichen kreisförmigen Querschnitt vom Durchmesser D₂ kleiner D₁, von der Länge L₂ kleiner L₁, deren Ende nahe am äußeren Eingang (4), der unter einer Entfernung Ls kleiner L₁ vom äußeren Niveau des äußeren Eingangs (4) angeordnet ist, den sogenannten inneren Eingang (5) bildet, über den wenigstens ein Teil der leichten Phase L_{A} eindringt, wobei diese Kammer durch wenigstens eine Leitung (6) verlängert ist, die den Abzug der abgetrennten leichten Phase L_{A} von der ersten äußeren Kammer nach außen ermöglicht,
- eine sogenannte zweite äußere Kammer (3) die eine im wesentlichen vertikale Symmetrieachse aufweist, die mit dieser ersten Kammer über eine Öffnung vom Durchmesser D1 verbunden ist, wobei diese zweite Kammer die dichte abgetrennte Phase sammelnde Kammer Mittel (10) zur Injektion einer leichten Extraktionsphase L_{B} aufweist, wobei die Injektion im Gegenstrom zur Strömung der dichten abgetrennten Phase stattfindet und wenigstens zum Teil in dieser dichten Phase stattfindet, die wenigstens zum Teil fluidisiert ist, und wenigstens einen Ausgang (12) zur Rückgewinnung der dichten wenigstens zum Teil desorbierten Phase D_{A} umfaßt.

2. Separator-Extraktionsvorrichtung nach Anspruch 1, bei der diese äußere Kammer (3) in der Verlängerung dieser ersten äußeren Kammer gemäß der Achse (X) angeordnet ist.

3. Separator-Extraktionsvorrichtung nach einem der vorhergehenden Ansprüche, bei der die zweite äußere Kammer (3) eine längs einer Achse längliche Gestalt aufweist und von einem im wesentlichen kreisförmigen Querschnitt vom Durchmesser D größer D₁ ist.

4. Separator-Extraktionsvorrichtung nach einem der vorhergehenden Ansprüche, bei der ein zylindrisches vertikales in der Achse der zweiten äußeren Kammer (3) angeordnetes Bohrloch (12) den Ausgang der dichten Phase bildet.

5. Separator-Extraktionsvorrichtung nach einem der vohergehenden Ansprüche, bei der die dichte Phase über ein Freisetzungsbohrloch austritt.

6. Separator-Extraktionsvorrichtung nach Anspruch 5, bei der die Mittel zur Injektion der dichten Fluidisierungsphase im Freisetzungsbohrloch vorgesehen sind.

7. Separator-Extraktionsvorrichtung nach einem der vorhergehenden Ansprüche, bei der die Mittel (10) zur Injektion der leichten Extraktionsphase gebildet werden durch einen gegen die Achse der zweiten Kammer (3) zentrierten Kranz, der mit gegen die Öffnung (7) gerichteten Öffnungen versehen ist.

8. Separator-Extraktionsvorrichtung nach einem der vorhergehenden Ansprüche, die im übrigen Mittel (40) zur Injektion der leichten Extraktionsphase oberhalb des Bettes der dichten Phase und im Gegenstrom zur Strömung der dichten abgetrennten Phase aufweist.

9. Separator-Extraktionsvorrichtung nach einem der vorhergehenden Ansprüche, Mittel (32) umfassend, um die Verteilung der dichten abgetrennten Phase zu vergleichmäßigen, die in der zweiten äußeren Kammer (3) ankommt und um die Wandströmung der Feststoffe zu brechen.

10. Separator-Extraktionsvorrichtung nach Anspruch 9, bei der die Mittel (32) durch Schaufeln gebildet sind.

11. Separator-Extraktionsvorrichtung nach Anspruch 10, bei der die Schaufeln an der Außenwand der Innenkammer (2) befestigt sind.

12. Separator-Extraktionsvorrichtung nach einem der vorhergehenden Ansprüche, bei der die Leitung(en) (6) derart angeordnet sind, daß die leichte Phase in einer im wesentlichen axialen Richtung, bezogen auf die erste äußere Kammer (1) abgezogen wird.

13. Separator-Extraktionsvorrichtung nach einem der Ansprüche 1 bis 11, bei der die Leitung(en) (6) derart angeordnet sind, daß die leichte Phase in einer Richtung im wesentlichen senkrecht zur Achse der ersten äußeren Kammer (1) abgezogen wird.

14. Separator-Extraktionsvorrichtung nach einem der vorhergehenden Ansprüche, bei der die Mittel zum Einführen des Gemisches M_{A} gebildet sind durch einen Eintritt (4) tangential zur Kammer (1).

15. Separator-Extraktionsvorrichtung nach einem dem vorhergehenden Ansprüche, bei der die Einführungsmittel für das Gemisch M_{A} in dem Eintritt (4) angeordnete Schaufeln (26) umfassen.

16. Separator-Extraktionsvorrichtung nach einem der vorhergehenden Ansprüche, bei der die Einführungsmittel für das Gemisch M_{A} ein spiralförmiges Dach umfassen.

17. Separator-Extraktionsvorrichtung nach einem der vorhergehenden Ansprüche, einen Wirbelstabilisierungskegel (31) umfassend, der in Höhe des Eintritts (4) längs der Achse gegenüber dem Eintritt (5) angeordnet ist.

18. Separator-Extraktionsvorrichtung nach einem der vorhergehenden Ansprüche, bei der die Kammer (3) Mittel umfaßt, die darauf abzielen, die Kontaktierung zwischen der leichten Phase L_{B} und der dichten Phase D_{A} zu verbessern.

19. Verwendung einer Separator-Extraktionsvorrichtung nach einem der vorhergehenden Ansprüche auf die Schnelltrennung - ausgehend von einem eine dichte Phase D_{A} und eine leichte Phase L_{A} umfassenden Gemisch M_{A} - der dichten Phase und der leichten Phase sowie zur Extraktion der durch diese dichte Phase D_{A} adsorbierten Produkte.

20. Verwendung nach Anspruch 19, bei der das zu trennende Gemisch ein Gemisch ist, das aus einer chemischen Reaktion stammt und wenigstens eine zu dieser Reaktion beitragende Phase umfaßt.
